# EUROPEAN PATENT APPLICATION

(11) **EP 1 583 008 A2**
(43) Date of publication of application: **05.10.2005**
(21) Application number: 05006737.0
(22) Date of filing: 29.03.2005
(51) Int. Cl.: G06F 17/50, G06F 9/44, G06T 17/00

(54) **Distributed CAD apparatus**

(30) Priority: 29.03.2004 JP 2004094091
(71) Applicant: RIKEN, Saitama 351-0198 (JP)
(72) Inventor: Ito, Masao, Wako-shi Saitama, 351-0198 (JP); Kase, Kiwamu, Wako-shi Saitama, 351-0198 (JP); Yagi, Hiroshi, Wako-shi Saitama, 351-0198 (JP); Kato, Masaya, Wako-shi Saitama, 351-0198 (JP)
(74) Representative: Grünecker, Kinkeldey, Stockmair & Schwanhäusser Anwaltssozietät

(57) **Abstract**

There is disclosed an apparatus comprising a plurality of constituting elements connected to one another via a network 11a. At least one of the plurality of constituting elements has a graphical user interface unit 20 and/or an external input/output unit 22 connectable to an external input device and an output device. Each constituting element has an application unit 12 which performs a high-order process as a CAD, a kernel unit 14 which performs a basic calculation as the CAD, a repository unit 16 which holds CAD data, and a display unit 18 which displays a calculation result. Furthermore, the application unit, the kernel unit, the repository unit, and the display unit are connected to one another via the network.

## Description

### BACKGROUND OF THE INVENTION

### Field of the Invention

The present invention relates to a distributed CAD apparatus for use in CAD, CAM, CAE, CAT and the like, particularly to a distributed CAD apparatus which can flexibly and effectively utilize calculator resources (capability of CPU, memory, disk capacity, etc.) and which is suitable for constructing a large-scaled and complicated model.

### Description of the Related Art

At present, in a site of research development and technical development, computer aided design (CAD), computer aided manufacturing (CAM), computer aided engineering (CAE), computer aided testing (CAT) and the like are used as simulation means for design, processing, analysis, and testing.

A volume data producing method has already been proposed and registered in which substantial data integrated with shape and physical property is stored by a small storage capacity in the CAD, CAM, CAE, CAT and the like (hereinafter referred to simply as CAD), and the CAD and simulation can be unified (Patent Document 1).

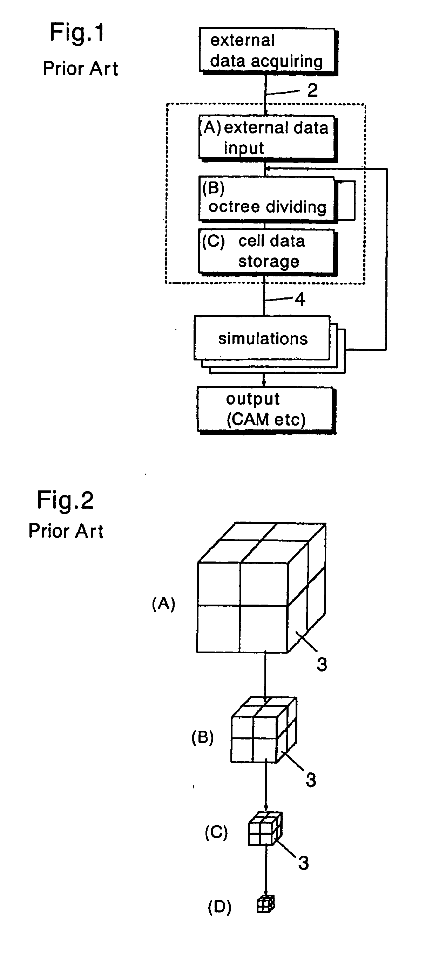

As shown in FIG. 1, the volume data producing method comprises external data input means (A), octree dividing means (B), and cell data storage means (C). External data 2 constituted of boundary data of an object acquired by external data acquiring means is input into a computer in which the method of the present invention is installed, and the external data 2 is divided into cubic cells whose boundary flat faces cross one another at right angles by octree division by the octree dividing means (B). Various physical property values are stored for each cell in storage means 4 such as a memory device and a file device by the cell data storage means (C).

FIG. 2 is an explanatory view of a data structure in this method. In the above-described octree dividing means (B), a space is divided by a modified octree. In octree representation, that is, space division by the octree, a cubic member 3 including a target cubic member (object) and constituting a standard is divided into eight (A), and an eight-division process is recursively repeated like (B) (C) (D) few times predetermined by user. A data amount can be reduced by the octree division more largely than by voxel representation.

On the other hand, "grid calculation" is known as means for sharing the resources (capability of CPU, memory, disk capacity, etc.) by a plurality of computers connected to a network. In the grid calculation, a plurality of computers are connected to a certain virtual computer (grid environment), and surplus resources of the respective computers are managed by this virtual computer.

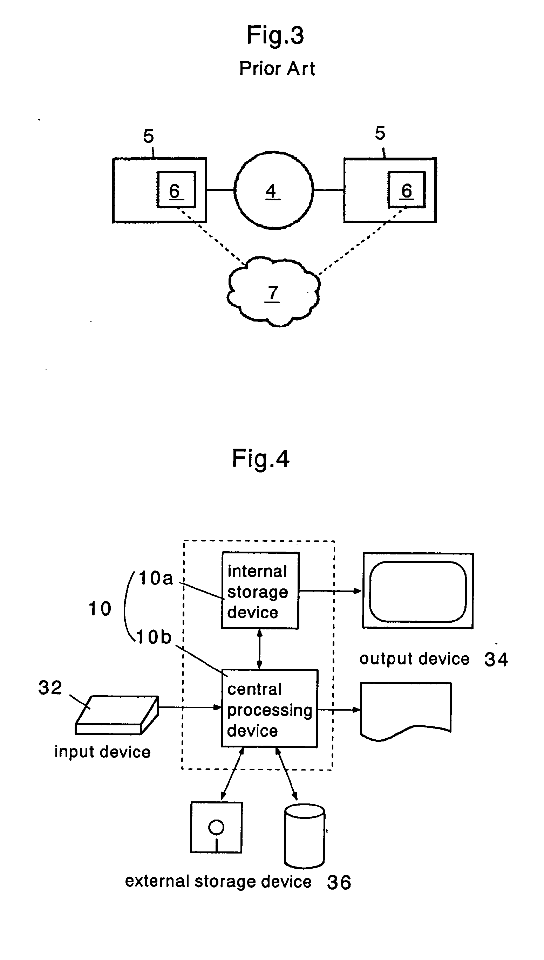

Moreover, Patent Document 2 is disclosed in order to prevent interactive performances of workstations from being impaired in the grid calculation. In this method, as shown in FIG. 3, a computer network 4 is connected to a plurality of workstations 5, the resources (e.g., CPUs 6) are managed by a virtual computer 7, availability of each workstation is judged, and a grid workload is assigned to the workstation having low availability.

Moreover, to achieve synchronous cooperative design by a plurality of computers connected to the network, Patent Document 3 has been disclosed. In this method, correction performed by an arbitrary workstation is duplicated by another workstation in a system.

Furthermore, Patent Document 4 is a related technique of Patent Document 1.

### [Patent Document 1]

Japanese Patent No. 3468464, "Volume Data Producing Method in which Shape and Physical Property is integrated"

### [Patent Document 2]

Jpn. Pat. Appln. KOKAI Publication No. 2004-38972, "System and Method for assigning Grid Calculation Workload to Network Workstation"

### [Patent Document 3]

Jpn. Pat. Appln. KOKAI Publication No. 2003-99470 "Method of Cooperative Design, Apparatus, and System thereof"

### [Patent Document 4]

Jpn. Pat. Appln. KOKAI Publication No. 1-216490 "Three-Dimensional Display Method of Octree-Coded Object and Apparatus using this Method"

The volume data produced by the method of Patent Document 1 has a characteristic that the data amount can be reduced by the octree division more largely than by the voxel representation. However, when the simulations of the design, processing, analysis, testing and the like are performed using the data in the CAD, CAM, CAE, CAT and the like, new data is accumulated for each simulation, and the data amount is enormous.

Therefore, there is a problem requiring a large amount of calculator resources (memory, CPU) which hold geometric information and physical value information.

To solve the problem, grid calculation can be applied using a plurality of computers connected to the network. However, even in this case, a plurality of computers need to perform the same or similar calculations in parallel using the same data, and the reduction of the calculator resources (memory, CPU) cannot be sufficiently achieved.

Moreover, in Patent Document 3, although the cooperative design can be performed using a plurality of computers, a single calculator is insistently closed as the CAD, and therefore the computers do not function in order to construct a large-scaled complicated model.

Therefore, there has been a limit to handling of a large model in a conventional technique. In many cases, the technique only handles execution with the single calculator. A plurality of kernels have not been operated even in a CAD system adapted for variance.

### SUMMARY OF THE INVENTION

The present invention has been developed to solve the problems. That is, an object of the present invention is to provide a distributed CAD apparatus capable of flexibly and effectively utilizing calculator resources (capacity of CPU, memory, disk capacity, etc.) and which is suitable for constructing a large-scaled and complicated model.

According to the present invention, there is provided a distributed CAD apparatus comprising: a plurality of constituting elements connected to one another via a network,
at least one of the plurality of constituting elements having: a graphical user interface unit and/or an external input/output unit connectable to an external input device and an output device,
each constituting element having: an application unit which performs a high-order process as a CAD; a kernel unit which performs a basic calculation as the CAD; a repository unit which holds CAD data; and a display unit which displays a calculation result,
the application unit, the kernel unit, the repository unit, and the display unit being connected to one another via the network.

According to the constitution of the present invention, a framework has the respective constituting elements connected to one another via the network, that is, the application unit, the kernel unit, the repository unit, and the display unit. Therefore, a plurality of constituting elements (application unit, kernel unit, repository unit, and display unit) are flexibly utilized in accordance with a model which is an object, and calculator resources (capacity of CPU, memory, disk capacity, etc.) can be effectively utilized.

According to a preferable mode of the present invention, the application unit has a kernel management unit which manages a plurality of kernel units connected to the network, and
the kernel management unit starts a usable kernel unit, distributes each basic calculation as the CAD to each kernel unit, and mediates exchange of information among the kernel units.

By this constitution, the plurality of kernel units are managed by the kernel management unit, the plurality of kernel units share the basic calculation as the CAD to perform parallel calculation, a calculation speed can be increased as a whole and a large data can be treated by a plurality of kernel units.

Moreover, external data is first divided into a plurality of cells whose boundary flat faces cross one another at right angles by an arbitrary division number, a plurality of kernel units are segmented for each first divided cell and started, and the subsequent octree dividing process is performed for each kernel unit.

By this constitution, since each kernel unit is segmented for each first divided cell of the external data, related data is limited, and therefore little information is exchanged among the kernel units, and the basic calculation as the CAD in each kernel unit can be facilitated and speeded up.

Each of the cells for use in each kernel unit has physical value data.

By this constitution, without accessing extra level, cell data of a necessary level can be connected to the external input device and output device together with the physical value data, and input/output of the data can be simplified and speeded up.

As described above, the distributed CAD apparatus of the present invention has superior characteristics that the apparatus is capable of flexibly and effectively utilizing the calculator resources (capacity of CPU, memory, disk capacity, etc.), and is suitable for constructing a large-scaled and complicated model.

Other objects and advantageous characteristics of the present invention will be apparent from the following description with reference to the accompanying drawings.

### BRIEF DESCRIPTION OF THE DRAWINGS

FIG. 1 is a flow diagram of a volume data producing method of Patent Document 1;
FIG. 2 is an explanatory view of a data structure in a method of Patent Document 1;
FIG. 3 is an explanatory view of a system of Patent Document 2;
FIG. 4 is a whole constitution diagram of a CAD apparatus according to the present invention;
FIG. 5 is a detailed structure diagram of a framework;
FIG. 6 is a diagram showing a data structure example of different division in which data is divided into ten only in an x-direction; and
FIG. 7 is a diagram showing a specific example of a distributed CAD apparatus according to the present invention.

### DESCRIPTION OF THE PREFERRED EMBODIMENT

The present invention will be described hereinafter with reference to the drawings. It is to be noted that parts common to the respective drawings are denoted with the same reference numerals, and redundant description is omitted.

FIG. 4 is a whole constitution diagram of a CAD apparatus according to the present invention. As shown in this figure, a CAD apparatus of the present invention comprises an internal storage device 10a, a central processing device 10b, an input device 32, an output device 34, and an external storage device 36 in the same manner as in a usual computer.

The internal storage device 10a comprises RAM or ROM, and stores information for works. The central processing device (CPU) 10b performs all processes of a computer such as calculation and input/output in a concentrated manner. The input device 32 is a keyboard, a mouse, or another input device, and the output device 34 is a CRT, a printer, or another output device. The external storage device 36 is an FD, an HD, or another storage device.

The CAD apparatus according to the present invention is a distributed CAD apparatus constituted of a plurality of computers which operate in a variant manner, and comprises a plurality of constituting elements connected to one another via a network 11a. The constituting element may be comprise the internal storage device 10a and the central processing device 10b, or may be virtually constituted on OS. In a data structure handled by the distributed CAD apparatus, as described layer, a communication amount at a variance operation time can be reduced.

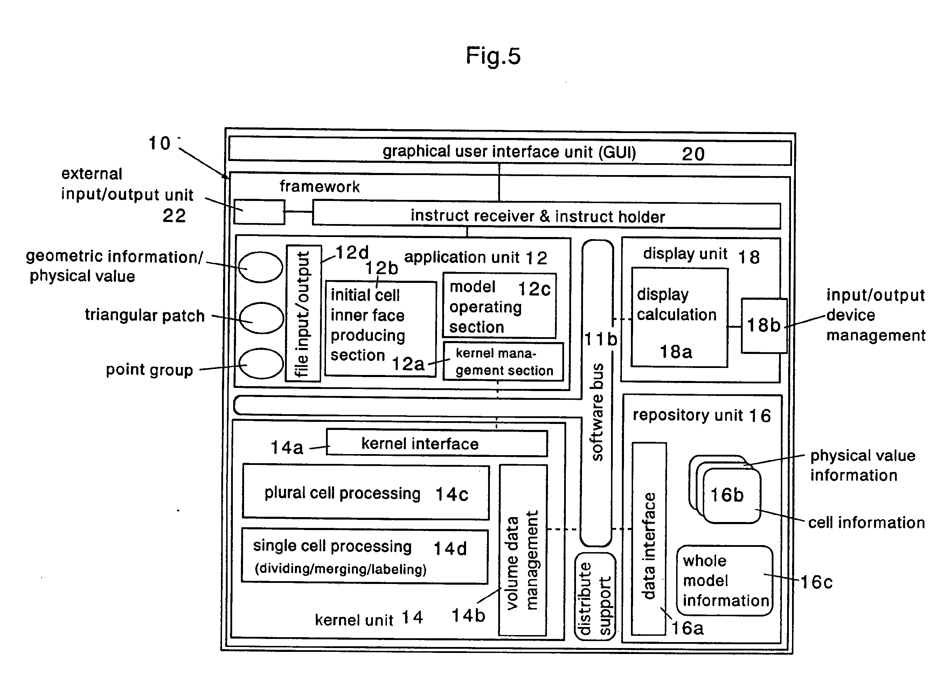

FIG. 5 is a detailed structure diagram of a framework. It is to be noted that the framework indicates herein a board portion constituting a substructure which forms a final system.

As shown in FIG. 5, a framework 10 has constituting elements including an application unit 12, a kernel unit 14, a repository unit 16, and a display unit 18. At least one of a plurality of constituting elements has a graphical user interface unit (GUI) 20 and/or an external input/output unit 22 connectable to the external input device 32 and the output device 34.

The application unit 12 performs a high-order process as CAD. The kernel unit 14 performs a basic calculation as the CAD. The repository unit 16 is a portion which holds CAD data. The display unit 18 displays a calculation result.

Additionally, the graphical user interface unit 20 can be constructed using an arbitrary library if necessary. The framework 10 is accessible by an external input/output without passing through the graphical user interface unit (GUI) 20.

In FIG. 5, a variant connection is shown by a broken line, and an invariant connection is shown by a solid line. Each module (application unit 12, kernel unit 14, repository unit 16, and display unit 18) of the framework 10 is connected to a network 11b in a variance manner. Therefore, each module may operate on the same single calculator, or on different calculators.

Furthermore, the kernel unit 14 may be distributed into a plurality of kernels to perform parallel operation. At this time, a kernel management section 12a is disposed in the application unit 12, and the same process can be executed regardless of a physical kernel number in such a manner that it is not necessary to be conscious of presence of a plurality of kernels 14 in the application unit 12. The kernel management section 12a starts usable kernels, and distributes calculation to each kernel. In a case where exchange of information among the kernels is required, the kernel management section 12a mediates the exchange.

For example, in a case where there are a plurality of modeling targets, a use mode is supposed in which calculations are executed by different kernels.

In FIG. 5, the application unit 12 has an initial cell inner face producing section 12b, a model operating section 12c, and a file input/output section 12d in addition to the kernel management section 12a. The initial cell inner face producing section 12b produces a cell inner face in a method of Patent Document 1, and the model operating section 12c performs a high-order process as the CAD by the method of Patent Document 1. The file input/output section 12d inputs/outputs data files of geometric information/ physical value, triangular patch, point group and the like.

In FIG. 5, the kernel unit 14 has a kernel interface 14a, a volume data management section 14b, a plural cell processing section 14c, and a single cell processing section 14d. The kernel interface 14a is connected to and managed by the kernel management section 12a via the network 11b (software bus in this example). The volume data management section 14b is connected to a data interface 16a of the repository unit 16 via the network 11b (bus) to manage data. The plural cell processing section 14c searches for an adjacent cell to perform composite calculation with the cell. The single cell processing section 14d performs individual calculation (dividing/merging/labeling, etc.) of each cell.

In FIG. 5, the repository unit 16 has the data interface 16a, cell information 16b, and whole model information 16c. Information (cell geometric information, physical value information, etc.) of each cell is stored in the cell information 16b, and information of a whole model is stored in the whole model information 16c via the data interface 16a.

In FIG. 5, the display unit 18 has a display calculation section 18a and an input/output device management section 18b. The display calculation section 18a performs size change, rotation, camera movement, rendering and the like, and transmits outputs to an external image display via the input/output device management section 18b.

Next, a data holding form in the present invention will be described.

It is generally difficult to hold a plurality of kernel units which perform basic calculation with respect to a single modeling target, but the units effectively function in a CAD system of the present invention centering on cells. This is because the calculation with respect to the modeling target can be localized by a cell unit.

In the present invention, external data is first divided into a plurality of cells whose boundary flat faces cross one another at right angles by an arbitrary division number, a plurality of kernel units are segmented for each first divided cell and started, and the subsequent octree dividing process is performed for each kernel unit. For example, when the whole external data is divided into 2x2x2 cells in x, y, z directions, it is possible to execute the basic calculation with different kernels with respect to eight cells at maximum.

Moreover, in general, there is not any isotropy in a three-dimensional space in a model which is a target, and the model is an object which is long in a specific axis direction, or a flat face which spreads in a two-dimensional direction. Therefore, when this whole model is represented by octree, extra data except of maximum level has to be held. This may be handled, when a calculation specifying is adapted to a modeling target. However, there is also a demand for different detailing for each aspect in an octree using method.

To solve the problem, in the present system which is a CAD system centering on the cells and in which the octree is used, the following data structure is used. It is to be noted that in this data structure, a repository unit is directly related in a meaning of the holding, and the unit is also related to another module because this data structure needs to be handled.

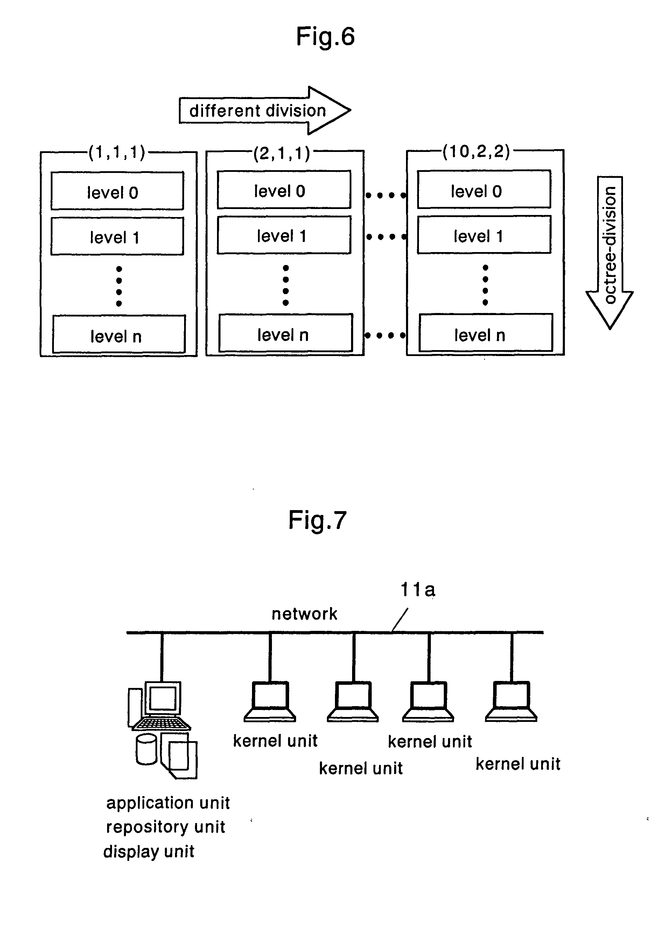

FIG. 6 shows an example of different division in which data is divided into ten only in an x-direction with respect to an object which is long in a specific axis direction (x-direction).

In this example, a space which is a target is divided into ten only in the x-direction, and is divided into two in a y-direction or a z-direction. In this initial stage; the whole is differently divided into 10x2x2 (division without any isotropy). Now, when each space is named like (1, 1, 1) for a space having a smallest coordinate of x, y, z, addresses (1, 1, 1), (2, 1, 1), (3, 1, 1) ... (10, 2, 2) are assigned to the respective divided cells. This figure shows that each cell is partially divided, and then octree-divided. It is to be noted that levels indicate dividing levels. Level 1 indicates a first division after the different division, and is constituted of eight elements in accordance with definition of the octree. In this case, one cell or eight divided cells constitute Level 2. This also applies to the following.

After performing the above-described different division, the only prepared cells can be octree-divided. In this manner, a variance process is possible while keeping an octree characteristic that a necessary portion is detailed.

In general, in the octree, a parent holds only branch information in a tree structure, and does not have information other than this structure information. The information held before the division is separately provided with a portion corresponding to "leaf" after the division.

On the other hand, in the present invention, each cell formed by an octree dividing process has physical value data in each kernel unit. That is, as a data structure, as shown in FIG. 6, both a division parent and a divided node have information (indicating information such as physical values given to the cells for the use in simulation).

In other words, in the present invention, even the node that is a parent constantly has information (obtained by the simulation or the like). Accordingly, display in a level required in the display (level of detail: LOD) is easily possible.

It is to be noted that information stored in the cell like the physical values mentioned herein is generally obtained after the simulation. When a target shape is divided by the octree, a value in a child node is indefinite. Similarly, a value (excluding a case in which the value is calculated beforehand, and continuously held) of a parent node in a case where the child node is also used is indefinite. In the present invention, a user can select means such as simple division (e.g., when the parent node has a value of 8, 1 is applied to the child node), and application of an equal value (e.g., when the parent node has a value of 8, eight divided nodes also have a value of 8).

The above-described present invention is effective means for realizing Patent Document 1. A module structure and data structure for the variance described in the present invention are effective in a case where an appropriate division unit is selected.

As a data holding form, as described in Patent Document 4, a method is known in which an object octree-displayed at a high speed is displayed. However, as described in the present invention, there is not inconsistently a system for holding information such as physical values even in the parent cell. In this system, the display in accordance with the above-described level can be performed at the high speed. However, an amount of information to be held apparently increases.

However, since the nodes on all the octrees hold values, the value requiring different detailing such as coupled analysis in the simulation can be held. For example, a simple spherical shell is assumed. In fluid analysis, the vicinity of a sphere needs to be detailed. On the other hand, when there is a heat source in a center of the spherical shell, and movement of heat is seen, a dividing level in the vicinity of the center needs to be large. When the design is performed from simulation results having different detail degrees in this manner, it is essential to hold the value not only in information of the cell simply corresponding to the "leaf" but also in the node midway.

FIG. 7 shows a specific example of a distributed CAD apparatus according to the present invention. In this example, the distributed CAD apparatus of the present invention is constituted of five computers connected to one another via a network 11a.

In this example, for example, only first computer is connected to an external input device and output device via a graphical user interface unit and/or an external input/output unit, and the remaining four computers are operated only as kernel units. Accordingly, only calculation is performed by a plurality of computers, and a calculation speed can be increased by at least four times or more.

Similarly in FIG. 7, when a plurality of portions which perform display and input/output are set, the display and input/output can be performed in a plurality of portions.

Moreover, the input/output may be performed by a plurality of computers, and the respective computers may perform independent calculation.

Furthermore, the repository unit 16 may be spared or disposed independently.

As described above, according to the constitution of the present invention, each computer has the application unit 12, kernel unit 14, repository unit 16, and display unit 18 connected to one another via the network 11a. Therefore, a plurality of application units, kernel units, repository units, and display units of a plurality of computers are flexibly used in accordance with a model which is a target, and calculator resources (capacity of CPU, memory, disk capacity, etc.) can be effectively utilized.

Moreover, a plurality of kernel units 14 are managed by a kernel management section 12a, the plurality of kernel units 14 can share basic calculation as CAD to perform parallel calculation, and a calculation speed can be increased as a whole.

Furthermore, since each kernel unit 14 is segmented for each first divided cell of the external data, related data is limited, therefore there is little exchange of information among kernel units, and the basic calculation as the CAD in each kernel unit can be facilitated and speeded up.

Additionally, since each cell formed by an octree dividing process has physical value data in each kernel unit, cell data having a necessary level can be connected to the external input device and output device together with the physical value data without accessing extra level, and input/output of the data can be simplified and speeded up.

It is to be noted that the present invention is not limited to the above-described embodiments and examples, and, needless to say, the present invention can be variously modified without departing from the scope of the present invention.

## Claims

1. A distributed CAD apparatus comprising:
a plurality of constituting elements connected to one another via a network,
at least one of the plurality of constituting elements having: a graphical user interface unit and/or an external input/output unit connectable to an external input device and an output device,
each constituting element having: an application unit which performs a high-order process as a CAD; a kernel unit which performs a basic calculation as the CAD; a repository unit which holds CAD data; and a display unit which displays a calculation result,
the application unit, the kernel unit, the repository unit, and the display unit being connected to one another via the network.

2. The distributed CAD apparatus according to claim 1, wherein the application unit has a kernel management unit which manages a plurality of kernel units connected to the network, and
the kernel management unit starts a usable kernel unit, distributes each,basic calculation as the CAD to each kernel unit, and mediates exchange of information among the kernel units.

3. The distributed CAD apparatus according to claim 1, wherein external data is first divided into a plurality of cells whose boundary flat faces cross one another at right angles by an arbitrary division number, a plurality of kernel units are segmented for each first divided cell and started, and the subsequent octree dividing process is performed for each kernel unit.

4. The distributed CAD apparatus according to claim 3, wherein each of the cells for use in each constituting element has physical value data.
